# EUROPEAN PATENT APPLICATION

(11) **EP 4 563 966 A1**
(43) Date of publication of application: **04.06.2025**
(21) Application number: 24215964.8
(22) Date of filing: 28.11.2024
(51) Int. Cl.: G01N 1/10

(54) **RUNOFF WATER COLLECTION DEVICE AND RUNOFF WATER COLLECTING METHOD USING THE SAME**

(30) Priority: 30.11.2023 KR 20230171492
(71) Applicant: University of Seoul Industry Cooperation Foundation, Seoul 02504 (KR)
(72) Inventor: KIM, Hyunook, 02504 Seoul (KR); KIM, Na Gyeong, 02504 Seoul (KR); LEE, Jeong Eun, 02504 Seoul (KR)
(74) Representative: RGTH

(57) **Abstract**

The present invention relates to a device for collecting runoff water, comprises body section having an open inlet at its upper part and an interior space for accommodating runoff water, and a buoyant member installed inside the body section, which floats due to buoyancy generated by the runoff water introduced into the body section. When the buoyant member, floated by the runoff water introduced into the body section, seals the open upper surface of the body section, the inlet includes a cap member with a vertically penetrating opening. The device according to the present invention, due to its structure, is a convenient and efficient tool for collecting runoff water. In particular, it can collect only a predetermined amount of runoff water during rainfall while blocking additional inflow, making it highly effective for applications requiring the collection of initial runoff water.

## Description

### CROSS-REFERENCE TO RELATED APPLICATION

This application claims priority to Korean Patent Application No. 10-2023-0171492, filed in the Korean Intellectual Property Office on November 30, 2023, the entire contents of which are hereby incorporated by reference.

### Technical Field

The present invention relates to a runoff water collection device and a method for collecting runoff water using the same. Specifically, the invention pertains to a device designed to collect runoff water, which flows along the surface of the ground. In particular, the invention focuses on a collection device capable of collecting only a predetermined amount of runoff water during rainfall and effectively blocking the inflow of additional runoff water.

### Background Art

It is necessary to collect runoff water, which flows along the surface of the ground, for analysis. For instance, analyzing runoff water in areas with specific pollution issues can be used for soil monitoring in those regions. Moreover, without conducting a soil analysis, the analysis of runoff water can be utilized for microplastic analysis in sample areas. In other words, by collecting and analyzing runoff water, it is possible to examine the soil of the region where the runoff water originated or to utilize the collected runoff water for analyzing the microplastics contained within it.

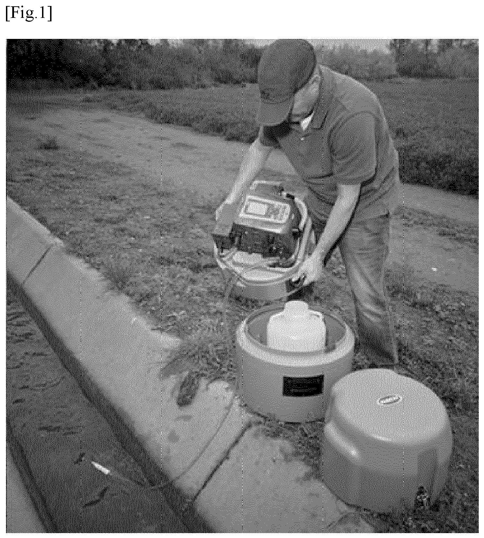

Figure 1 illustrates the collection of runoff water using a conventional automatic runoff water sampler. As shown in Figure 1, in order to collect water using a conventional device, the sample collection unit must always be in contact with the water surface of the flowing water. The device operates by activating a pump for a preset time in a steady flow condition to collect a specified quantity of water into the sampling bottle inside the sampler.

However, such conventional devices have the drawback of being usable only for collecting water from continuously flowing streams or stagnant pools. They cannot collect water that infiltrates into the ground surface from above the ground.

Furthermore, conventional automatic water sampling devices cannot be used for the purpose of collecting only the initial runoff during rainfall. It is difficult to predict the exact timing of rainfall and set the device in advance, requiring manual installation when rain begins. Additionally, the equipment is expensive, costing over 10 million KRW per unit.

In particular, it has been challenging to collect the initial runoff at the onset of rainfall in specific areas. Thus, there is a need for a collection technology capable of automatically blocking further inflow of runoff water once a certain amount of initial runoff has been collected during rainfall.

### SUMMARY

The present invention aims to provide a technology that can automatically seal itself after collecting initial runoff water without requiring additional manual operation.

Furthermore, the invention allows for pre-embedded installation at specific soil points identified for analysis, taking into account rainfall or weather forecasts. This enables the automatic collection of runoff water, along with surface pollutants, at the initial stages of rainfall in designated locations.

The present invention relates to a device for collecting runoff water, comprises body section having an open inlet at its upper part and an interior space for accommodating runoff water, and a buoyant member installed inside the body section, which floats due to buoyancy generated by the runoff water introduced into the body section.

When the buoyant member, floated by the runoff water introduced into the body section, seals the open upper surface of the body section, the inlet includes a cap member with a vertically penetrating opening.

It is preferable that a mesh is installed at the inlet to allow the inflow of runoff water while blocking the entry of foreign substances.

The body section has a cylindrical shape, and the buoyant member has a spherical shape. The diameter of the cap member is designed to be smaller than the diameter of the body section.

The cap member has a cylindrical shape with a vertically penetrating opening, a mesh for blocking foreign substances installed at the upper end, and a curved section at the lower end corresponding to the curvature of the spherical buoyant member. This structure blocks additional runoff water inflow when the body section is filled, facilitating the collection of initial runoff water

The buoyant member is a ball into which air can be injected, and it is preferable that air is injected into the buoyant member to inflate it after being placed inside the body section.

The present invention relates to a method for collecting runoff water using a runoff water collection device, comprises placing the buoyant member inside the body section, injecting air into the buoyant member to inflate it, attaching a mesh to the inlet and allowing runoff water to flow into the body section, causing the buoyant member to rise and seal the inlet.

The device according to the present invention, due to its structure, is a convenient and efficient tool for collecting runoff water. In particular, it can collect only a predetermined amount of runoff water during rainfall while blocking additional inflow, making it highly effective for applications requiring the collection of initial runoff water.

Additionally, the present invention allows for the easy collection and analysis of runoff water in areas with specific pollution issues, facilitating environmental monitoring. Furthermore, it offers the advantage of enabling the analysis of specific components, such as microplastics, in sample regions through runoff water analysis without the need for soil analysis.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
Figure 1 illustrates the actual implementation of a runoff water collection method according to prior art.
Figures 2 to 4 depict the process of runoff water being filled into the container of the runoff water collection device according to the present invention.
Figure 5 shows a detailed view of the cap member of the runoff water collection device according to the present invention.

### DETAILED DESCRIPTION

The objectives, specific advantages and novel features of the present disclosure will become more apparent from the following detailed description and the preferred embodiments, which are associated with the accompanying drawings. In addition, terms described herein are terms defined in consideration of functions in the present invention, which may vary according to the intention or convention of a user or an operator. Therefore, definitions of these terms should be made based on the contents throughout the present specification.

Hereinafter, the present disclosure will be described in detail with reference to the accompanying drawings.

To conceptually describe the runoff water collection device of the present invention: a stainless steel container with an inlet narrower than the inner diameter of the container is prepared, along with a spherical rubber ball larger in diameter than the container's inlet. The ball is placed inside the container, and air is injected into the ball to inflate it.

The collection device is then buried in the soil to a depth matching the length of the container by creating a burial space using an auger or similar tool. A 2mm mesh is installed on the surface of the inlet to prevent foreign objects such as stones or branches from entering and interfering with the sealing of the device, while allowing normal soil particles and pollutants to pass through.

As runoff water is generated, soil particles, organic matter, and substances such as microplastics located in the surface soil around the container (sampler) flow into the sampler. With the rising water level inside the container due to the inflow of runoff water, the ball inside the container floats accordingly. Eventually, the ball seals the inlet, preventing further inflow of soil or water into the collection container.

This collection device operates as a system in which the ball inside the container automatically floats with the inflow of runoff water and seals the inlet once it reaches a certain height. Even during continuous rainfall, it prevents the loss or contamination of the collected runoff water caused by the ongoing inflow of soil or runoff water. This makes it possible to use the device for analyzing runoff water from the initial sampling environment without interference.

This system allows for the automatic sealing of the container without additional operation after collecting the initial runoff water. When the container reaches its full capacity and the ball seals the inlet, the collection bottle prevents any further inflow or outflow of substances, ensuring no loss of materials initially collected.

By adjusting the size of the buried container according to average rainfall or weather forecasts, runoff water containing pollutants from the surrounding surface layer can be collected for a specific period at a targeted location. Additionally, the system enables the collection and analysis of specific substances (e.g., microplastics) from sampling points through runoff water sampling.

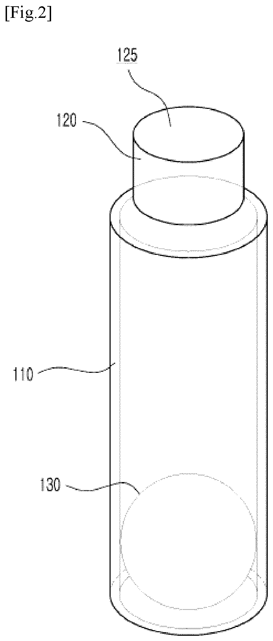

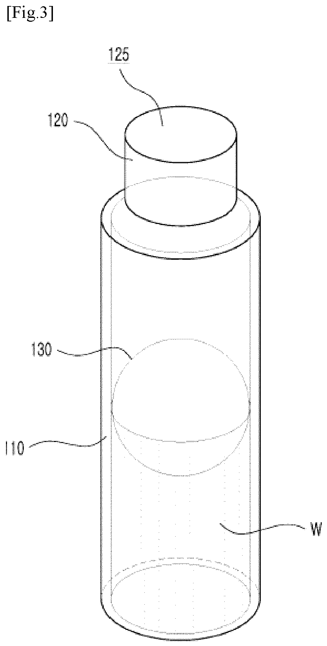

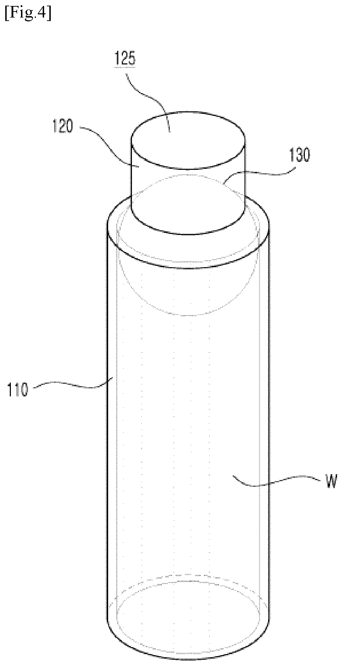

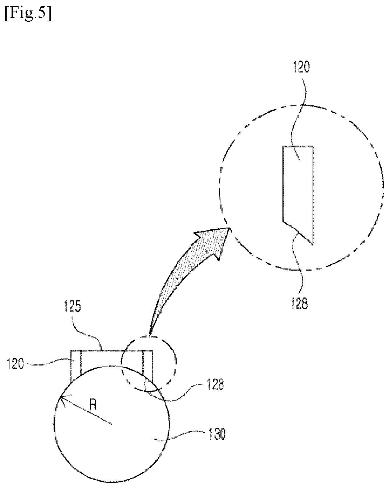

Figure 1 illustrates the actual implementation of a runoff water collection method according to the prior art. Figures 2 to 4 depict the process of runoff water being filled into the container of the runoff water collection device according to the present invention. Figure 5 shows a detailed view of the cap member of the runoff water collection device according to the present invention.

The present invention comprises a body section (110) with an internal space for accommodating runoff water, a cap member (120) for opening and closing the upper part of the body section, and a buoyant member (130) installed inside the body section, made of a material that floats on water due to buoyancy.

The buoyant member is preferably spherical in shape with a fixed radius (R) and, when expanded, forms a complete spherical shape after being placed inside the container. To achieve this, the buoyant member is first inserted into the container, and air is then injected into it for inflation.

The buoyant member (130), which rises due to buoyancy generated by the runoff water introduced into the body section, is structured to seal the open upper surface of the body section. A cap member (120) can be provided at the upper inlet, and this cap member includes a vertically penetrating opening. A mesh (125) is installed at the top of the cap member to block the entry of foreign substances.

Figures 2 to 4 illustrate the process of runoff water being sequentially filled into the container of the runoff water collection device according to the present invention. The unexplained reference symbol W represents the water rising inside the container.

The body section (110) has a cylindrical shape, and the buoyant member (130) has a spherical shape. The diameter of the cap member (120) is designed to be smaller than the diameter of the body section and smaller than the diameter of the buoyant member, preventing the buoyant member from escaping outside.

As shown in Figure 5, the cap member (120) has a cylindrical shape with a vertically penetrating opening. A mesh (125) is installed at the top to block foreign substances, and a curved section (128) is formed at the bottom to correspond to the curvature (R) of the spherical buoyant member. This design enhances the sealing of the upper part when the container is fully filled with runoff water.

By preventing the inflow of additional runoff water once the container is full, this structure is advantageous for collecting initial runoff water.

The present invention relates to a method for collecting runoff water using a runoff water collection device, comprises placing the buoyant member inside the body section, injecting air into the buoyant member to inflate it, attaching a mesh to the inlet and allowing runoff water to flow into the body section, causing the buoyant member to rise and seal the inlet.

Although the present disclosure has been described in connection with some examples herein, the present disclosure should not be limited to those examples only, and various other changes and modifications made by those skilled in the art from the basic concept of the disclosure are also within the scope of the claims appended herein.

## Claims

1. A runoff water collection device, comprising:
a body section having an open inlet at an upper portion and an internal space configured to accommodate runoff water; and
a buoyant member disposed within the body section, the buoyant member being configured to float due to buoyancy generated by the runoff water introduced into the body section,
wherein the buoyant member, floated by the runoff water introduced into the body section, is configured to seal the open upper surface of the body section.

2. The runoff water collection device according to claim 1,
wherein a mesh is installed at the inlet, allowing the inflow of runoff water while preventing the entry of foreign substances.

3. The runoff water collection device according to claim 1,
further comprising a cap member provided at the inlet, the cap member having a vertically penetrating opening.

4. The runoff water collection device according to claim 3,
wherein the cap member includes a mesh that allows the inflow of runoff water while preventing the entry of foreign substances.

5. The runoff water collection device according to claim 4,
wherein the body section has a cylindrical shape, the buoyant member has a spherical shape, and the diameter of the cap member is smaller than the diameter of the body section.

6. The runoff water collection device according to claim 5,
wherein the cap member has a cylindrical shape with a vertically penetrating opening, a mesh for blocking foreign substances is installed at its upper end, and a curved section corresponding to the curvature of the spherical buoyant member is formed at its lower end

7. The runoff water collection device according to claim 5,
wherein the buoyant member is a ball into which air can be injected, and the buoyant member is inflated by injecting air into it after being placed inside the body section.

8. A method for collecting runoff water using the runoff water collection device according to claim 1, comprising:
placing the buoyant member inside the body section;
injecting air into the buoyant member to inflate it;
attaching a mesh to the inlet; and
allowing runoff water to flow into the body section, causing the buoyant member to rise and seal the inlet.
